# EUROPEAN PATENT SPECIFICATION

(11) **EP 2 106 962 B1**
(45) Date of publication and mention of the grant of the patent: **22.02.2012**
(21) Application number: 08006699.6
(22) Date of filing: 01.04.2008
(51) Int. Cl.: B60N 2/48

(54) **Trigger mechanism for an active headrest system and vehicle seat**
Auslösermechanismus für ein aktives Kopfstützensystem und Fahrzeugsitz
Mécanisme de déclenchement pour système d'appuie-tête actif et siège de véhicule

(43) Date of publication of application: 07.10.2009
(73) Proprietor: L & P SWISS HOLDING COMPANY, 9303 Wittenbach (CH)
(72) Inventor: Samain, Maxime, 8870 Emelgem (BE)
(74) Representative: Banzer, Hans-Jörg

(56) References cited:
- EP-A- 0 967 115
- DE-B3-102004 016 474
- DE-B3-102006 006 518

## Description

The present invention relates to a trigger mechanism for an active headrest system and to a vehicle seat equipped with the trigger mechanism.

In an active headrest system, which is sometimes also referred to as an "anti-whiplash protection system" the headrest of a vehicle seat is driven to move forward in case of a rear-end collision so as to support a seat occupant's head. Typically, the activation of the headrest movement is mechanically triggered by inertia forces exerted by the seat occupant. That is to say, an active headrest system typically requires a mechanical trigger mechanism for initiating movement of the headrest in case of a rear-end collision.

For example, mechanical trigger mechanisms for active headrest systems are described in DE 10 2006 036 623 B3 and in DE 10 2006 032 639 B3. The general concept of these trigger mechanisms is to place a mechanical detector in the lower region of the backrest of a vehicle seat. The mechanical detector is used to transmit inertia forces exerted by a seat occupant via a Bowden cable to an actuating mechanism, which accomplishes movement of at least a portion of the headrest.

DE 10 2006 006 518 B3 discloses a further trigger mechanism for an active headrest system, whereby the trigger mechanism comprises an impact member arranged in the lower portion of a backrest of a vehicle seat. The impact member receives a force generated by an occupant of the vehicle in the case of a collision of the vehicle and is part of an actuating mechanism which couples the impact member via a Bowden cable arrangement to a drive mechanism for moving the headrest of the vehicle seat in the case of a vehicle collision. The impact member is pivotably coupled with respect to the seat frame via a generally U-shaped tube member and has a plate-like configuration.

A further possibility is to place a panel or the like in an upper region of the backrest of a vehicle seat and to couple the panel to the headrest in such a way that a backward pivoting motion of the panel causes a forward pivoting motion of the headrest.

However, with these known trigger mechanisms there exists a problem that due to their structure they have to be placed at a specific location in the backrest, i.e. either in the upper region or in the lower region. This may cause discomfort for a seat occupant. Further, the structure of the known trigger mechanism is rather complex, and it may be difficult to find a good balance between a sufficient support for the occupant's head in case of a rear-end collision and a good comfort.

In view of the above, it is an object of the present invention to provide an improved trigger mechanism for an active headrest system and a corresponding vehicle seat, thereby providing a simple structure of the trigger mechanism and a good comfort for the seat occupant.

This object is achieved by a trigger mechanism according to independent claim 1. The dependent claims define preferred and advantageous embodiments of the invention.

According to the invention, a trigger mechanism for an active headrest system comprises a support member for providing support of upholstery in the backrest of a vehicle seat and adapted to be flexibly suspended in a seat frame. For example, the support member may be a wire framework having a pair of side wires and a plurality of transverse wires extending therebetween. Other types of support members may be used as well, e.g. support members having transversely extending plastic belts or flexible plastic pads. It is also possible to use a combination of wires and plastic belts.

Further, the trigger mechanism comprises a Bowden cable arrangement which includes a wire guided in a sheath and is adapted to couple the support member to the seat frame in such a way that the tension of the wire is controlled by movement of the support member relative to the seat frame. The wire of the Bowden cable arrangement is adapted to be coupled to an actuating mechanism for movement of a headrest of the vehicle seat. The entire headrest or only a portion thereof may be moved. Accordingly, the movement of the headrest actually refers to a movement of at least a portion of the headrest.

Accordingly, the trigger mechanism according to the invention utilizes inertia forces exerted by the seat occupant onto the support member in case of a rear-end collision to tension the wire of a Bowden cable arrangement. By this means, additional mechanical detection components are not required and a good comfort is obtained.

According to the invention, the Bowden cable arrangement is coupled to the support member at opposite sides thereof. In particular, first attachment means are provided for coupling the sheath of the Bowden cable arrangement to a first side of the support member, and second attachment means are provided for coupling the sheath of the Bowden cable arrangement to a second side of the support member, opposite to the first side. Further, connecting means are provided for coupling the sheath of the Bowden cable arrangement to the seat frame. The sheath of the Bowden cable arrangement may comprise a first portion and a second portion which are separated from each other, the wire of the Bowden cable arrangement extending from a first end portion adapted to be coupled to the actuating mechanism, through the first and second portions of the sheath, to a second end portion adapted to be coupled to the seat frame. In this way, an unsheathed portion of the Bowden cable arrangement is provided and the two portions of the sheath may be displaced with respect to each other. According to the embodiment, the first portion of the sheath extends between the actuating mechanism and the connecting means, and the second portion of the sheath extends between the first attachment means and the second attachment means. In this way, movement of the support member with respect to the seat frame is converted to tension of the wire of the Bowden cable arrangement in a symmetric fashion. Accordingly, symmetric support characteristics of the backrest are maintained during a rear-end collision. According to an embodiment, it is also possible to have further portions of the sheath and to arrange the Bowden cable arrangement in a loop-fashion. That is to say, a third portion of the sheath could extend back from the second attachment means to the first attachment means, the unsheathed portion of the Bowden cable arrangement between the second and third portion of the sheath being coupled to the seat frame. In this way, the amount of wire pulled into the first portion of the sheath at the actuating mechanism and of the Bowden cable arrangement during activation of the trigger mechanism can be multiplied.

According to an embodiment, the trigger mechanism comprises an actuating mechanism configured to tilt the headrest in a forward direction or configured to displace a front portion of the head rest in a forward direction upon tensioning the wire of the first Bowden cable arrangement.

Preferably, the trigger mechanism is configured in such a way that the movement of the headrest is triggered when a load applied to the support member exceeds a threshold value. According to an embodiment, the threshold value is selected to be above 400 N. Preferably, the threshold value is selected to be above 500 N. In some cases, e.g. when load is applied in a punctual way, a threshold value of 200 N may be sufficient. By this means, it is possible to provide a wide comfort region of regular support provided by the support member and the upholstery of the seat, and a trigger region above the threshold value which is reached only if there are significant inertia forces exerted onto the support member.

In addition, the actuating mechanism may also comprise a lever assembly for converting movement of the wire of the Bowden cable arrangement into movement of the headrest. By means of the lever mechanism, a suitable range of movement of the headrest may be adjusted even if the range of movement of the support member with respect to the seat frame in the trigger region is limited. In addition or alternatively, it is again possible to arrange the Bowden cable arrangement in multiple loops across the seat frame and support member so as to increase the amount of wire pulled into the sheath at the actuating mechanism end of the Bowden cable arrangement.

According to an embodiment, the trigger mechanism may also be combined with an adjustment mechanism for adjusting the degree of support in the lumbar region of the backrest. For this purpose, adjustment means may be provided which comprise a further Bowden cable arrangement including a wire guided in a sheath and a adapted to couple the support member to the seat frame in such a way that the position of the support member relative to the seat frame is controlled by tension of the wire. That is to say, a first Bowden cable arrangement may be provided for coupling the support member to the actuating mechanism of the headrest, and a second Bowden cable arrangement may be provided for coupling the support member to an actuator for adjusting the degree of lumbar support. The first Bowden cable arrangement and the second Bowden cable arrangement may have a similar structure. It is also possible that the first Bowden cable arrangement and the second Bowden cable arrangement have common components, e.g. a sheath behind the support member.

According to an embodiment, a coupling piece is provided between the wire of the first Bowden cable arrangement and the wire of the second Bowden cable arrangement. In this way, a change in the position of the support member when adjusting the degree of lumbar support displaces the wire of the first Bowden cable arrangement in a corresponding amount and substantially the same trigger threshold is maintained for the trigger mechanism. In particular, an end portion of the wire of the first Bowden cable arrangement may be coupled to the seat frame via the wire of the second Bowden cable arrangement.

According to a further embodiment of the invention, a vehicle seat with an active headrest system is provided. The vehicle seat comprises a headrest which is moveable in a forward direction by means of an actuating mechanism, a backrest with a seat frame, and a trigger mechanism in accordance with the present invention.

In the following, the invention will be explained in more detail by referring the exemplary embodiments and to the accompanying drawings.
Fig. 1 schematically illustrates the operating principles of an active headrest system according to an embodiment of the invention.
Fig. 2 schematically illustrates a vehicle seat with a trigger mechanism for an active headrest system according to an embodiment of the invention.
Fig. 3 schematically illustrates a vehicle seat with a trigger mechanism for an active headrest system according to a further embodiment of the invention.
Fig. 4(A) and (B) schematically illustrate the operation of a trigger mechanism for an active headrest system according to an embodiment of the invention.
Fig. 5 shows a partial perspective view of a trigger mechanism according to an embodiment of the invention.
Fig. 6(A), (B), and (C) show bottom views of the trigger mechanism of Fig. 5 in different states of operation.
Fig. 7 shows a partial perspective view of a trigger mechanism for an active headrest system according to a further embodiment of the invention.
Figs. 8(A), (B), and (C) show bottom views of the trigger mechanism of Fig. 7 in different states of operation.
Fig. 9 shows a partial perspective view of the trigger mechanism of Figs. 7 and 8 with activated support in the lumbar region.
Fig. 10 shows a bottom view of the trigger mechanism of Figs. 7-9 with activated support in the lumbar region.

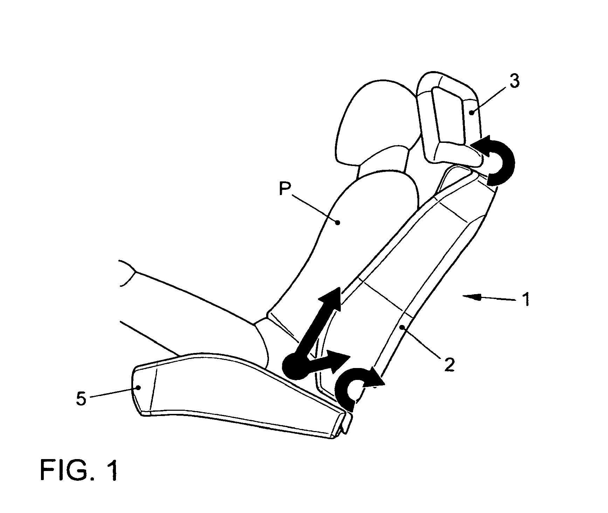

Fig. 1 illustrates a vehicle seat with an active headrest system for providing anti-whiplash protection. The vehicle seat 1 comprises a backrest 2, a headrest 3, and a seat portion 5. As illustrated by the arrows, if a vehicle equipped with the vehicle seat 1 comes into a rear-end collision, a seat occupant P is pushed into the vehicle seat 1 due to inertia forces. In particular, the seat occupant P exerts an inertia force having components in a direction essentially parallel to the backrest 2 and components in a direction essentially parallel to the seat portion 5. Typically, the components parallel to the seat portion 5 are larger as compared to the components parallel to the backrest 2. The inertia forces are used to trigger the active headrest system so as to provide anti-whiplash protection. As illustrated, a forward movement of the headrest 3 is triggered. Further, the backrest 2 may be tilted in a backward direction. In this way, the risk of whiplash injuries is reduced. Generally, the forward movement of the headrest 3 may involve movement of the entire headrest 3 or movement of only a portion of the headrest 3.

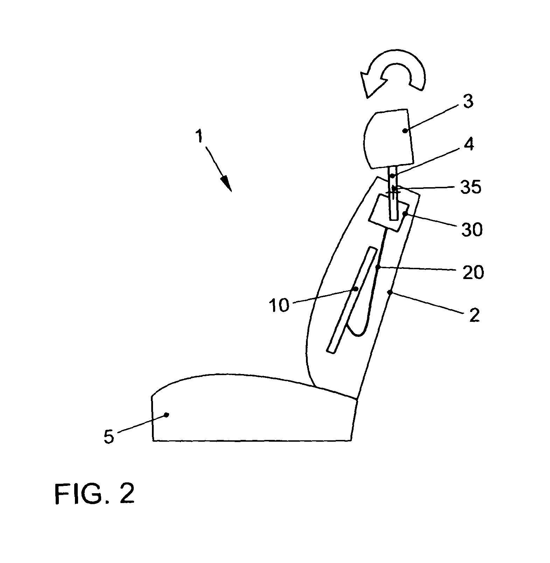

Fig. 2 schematically illustrates a vehicle seat 1 having an active headrest system. The vehicle seat 1 may generally correspond to that as illustrated in Fig. 1, and similar components have been designated with the same reference signs.

The vehicle seat comprises a support member 10 for providing support of upholstery in the backrest 2 of the vehicle seat 1. The support member 10 may be of any type which is suitable to be flexibly suspended in a seat frame (not illustrated in Fig. 2). For example, the support member 10 may be a wire framework comprising a pair of side wires and a plurality of transverse wires extending between the side wires. Further, the support member 10 may also comprise other types of transverse members, e.g. plastic belts. It is also possible that the support member 10 is formed of a substantially plate-like flexible plastic pad.

As further illustrated, the vehicle seat 1 comprises an actuating mechanism 30 for accomplishing a forward movement of the headrest 3. For this purpose, the headrest 3 is pivotably coupled to the backrest 2 via support rods 4. In particular, the headrest 3 is pivotable about a pivot point schematically illustrated at 35. The actuating mechanism 30 may comprise a lever mechanism for bringing about the pivoting movements of the headrest 3.

For triggering operation of the actuating mechanism 30, the support member 10 is coupled to the actuating mechanism 30 via a Bowden cable arrangement 20. In particular, by tensioning the wire of the Bowden cable arrangement 20, the headrest 3 is caused to pivot forwardly and thereby support a seat occupant's head in case of a rear-end collision. Accordingly, an actuating mechanism of the active headrest system comprises the support member 10 and the Bowden cable arrangement 20 for coupling to the actuating mechanism 30. In the trigger mechanism, the Bowden cable arrangement 20 is adapted to couple the support member 10 to the seat frame (not illustrated) in such a way that the tension of the wire of the Bowden cable arrangement is controlled by movement of the support member 10 relative to the seat frame.

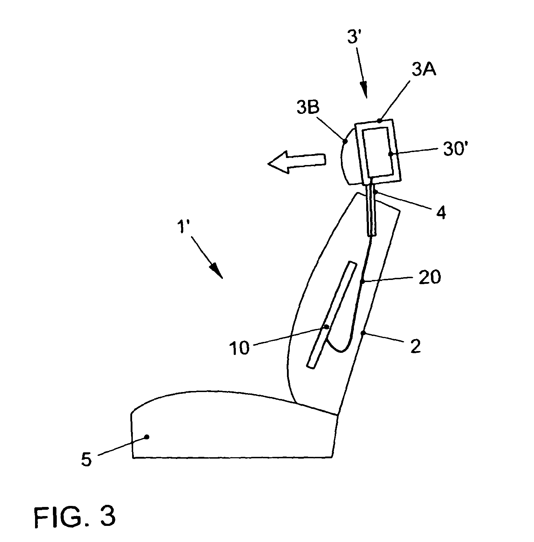

Fig. 3 schematically illustrates a further vehicle seat 1' having an active headrest system. The vehicle seat 1' is generally similar to the vehicle seat 1 of Fig. 2 and similar components have been designated with the same reference signs. As compared to the vehicle seat 1 of Fig. 2, the vehicle seat 1' comprises a different type of actuating mechanism 30'. In particular, as compared to the vehicle seat 1 of Fig. 2 in which the actuating mechanism 30 is arranged within the backrest 2, the actuating mechanism 30' is arranged within a headrest 3' of the vehicle seat 1'. The headrest 3' comprises a first portion 3A and a second portion 3B which is moveable with respect to the first portion 3A. The first portion 3A is supported on the backrest 2 via support rods 4. The second portion 3B comprises a front portion of the headrest 3' and may be displaced substantially in a forward direction so as to support a seat occupant's head.

The trigger mechanism for the active headrest system of the vehicle seat 1' again comprises the support member 10 and the Bowden cable arrangement 20. The operation is as explained for the trigger mechanism of the vehicle seat 1. However, in this case the Bowden cable arrangement 20 is guided up to the headrest 3' so as to be coupled to the actuating mechanism 30' within the headrest 3'. As illustrated, the Bowden cable arrangement 20 may be guided through one of the support rods 4.

It is to be understood that the trigger mechanism of the vehicle seats 1 and 1' may be used in connection with other types of active headrest system as well. In particular, various types of actuating mechanisms are possible. For example, an actuating mechanism could also be formed by a combination of an actuating mechanism in the backrest, e.g. as illustrated in Fig. 2, and an actuating mechanism in the headrest, e.g. as illustrated in Fig. 3.

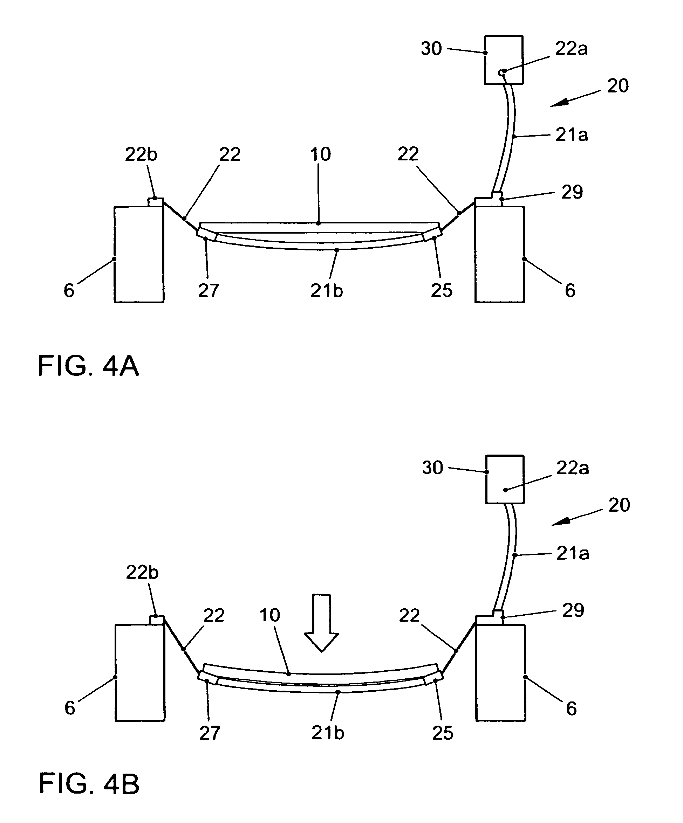

In the following, implementations of the trigger mechanism will be discussed in more detail. Figs. 4(A) and (B) schematically illustrate an implementation of the trigger mechanism. The trigger mechanism may be used in the vehicle seats 1, 1' as illustrated in Figs. 1-3 or in other types of vehicles seats equipped with an active headrest system. In Figs. 4(A) and (B), an actuating mechanism of the active headrest system is denoted by 30. It is to be understood that the actuating mechanism 30 may be of the types as illustrated in Figs. 2 and 3, or may be of any other suitable type. Further, it is to be understood that the support member 10 may actually be coupled to the seat frame 6 by other means than only by the Bowden cable arrangement 20.

As illustrated, the trigger mechanism comprises the support member 10 which is flexibly suspended in the seat frame 6. The Bowden cable arrangement 20 comprises a wire 22 guided in a sheath 21 a, 21 b. The Bowden cable arrangement couples the support member 10 to the seat frame 6 in such a way that the tension of the wire is controlled by movement of the support member 10 relative to the seat frame 6. The wire 22 of the Bowden cable arrangement 20 is further coupled to the actuating mechanism 30. in the actuating mechanism 30, movement of a first end portion 22a of the wire 22 is converted into a forward movement of the headrest. It is to be understood, that a forward movement of the headrest may comprise a forward movement of the entire headrest as illustrated in Fig. 2 or a forward movement of only a portion of the headrest, e.g. a front portion, as illustrated in Fig. 3. A second end portion of the wire 22 is coupled to the seat frame 6. The sheath 21 a, 21 b of the Bowden cable arrangement 20 is coupled to the seat frame 6 by a connecting member 29 (which may also be referred to as a connecting means), and is further coupled to the support member 10 by a first attachment member 25 and a second attachment member 27 (which may also be referred to as first and second attachment means). The sheath of the Bowden cable arrangement 20 comprises a first portion 21a which extends between the actuating mechanism 30 and the connecting member 29, and a second portion 21 b which extends between the first attachment member 25 and the second attachment member 27. The first and second portions of the sheath 21a, 21b are moveable with respect to each other, i.e. may be displaced along the wire 22, which extends through both portions of the sheath 21 a, 21b. For some types of support member, e.g. a plastic belt system, it may be possible to eliminate the second portion of the sheath 21 b by guiding the wire 22 directly along the support member 10.

As further illustrated, the first and second attachment members 25, 27 are coupled to the support member 10 at opposite sides thereof. Further, the connecting member 29 is arranged on one side of the seat frame 6, and the connecting point of the second end portion 22b of the wire 22 with respect to the seat frame 6 is arranged on the opposite side of the seat frame 6. The first attachment member 25 is located on a first side of the support member 10 which is in vicinity of that side of the seat frame 6 which carries the connecting member 29, and the second attachment member 27 is located on a second side of the support member 10 which is in vicinity of that side of the seat frame 6 which carries the connecting point with respect to the second end portion 22b of the wire 22. In this structure, an unsheathed portion of the Bowden cable arrangement 20 extends between the connecting member 29 and the first attachment member 25, and an unsheathed portion of the Bowden cable arrangement 20 extends between the second attachment member 27 and the connecting point of the second end portion 22b of the wire 22 with respect to the seat frame 6.

In Fig. 4(A), the support member 10 is in an unloaded state, and the trigger mechanism is deactivated. In this state, the actuating mechanism 30 is inactive and the headrest is in its normal position.

In Fig. 4(B), the situation during a rear-end collision is illustrated. During the rear-end collision, a load, illustrated by the arrow, is exerted onto the support member 10 in a backward direction. This causes the support member 10, which is flexibly suspended within the seat frame 6, to be pushed in the backward direction. As further illustrated, the support member 10 is caused to arch in the backward direction, towards the second portion of the sheath 21 b.

Due to the backward movement of the support member 10, the wire 22 of the Bowden cable arrangement 20 is tensioned, and the length of the unsheathed portions of the Bowden cable arrangement 20 is increased. This in turn causes the first portion 22a of the Bowden cable arrangement 20 to be pulled into the first portion of the sheath 21 a, thereby bringing the actuating mechanism 30 from the inactive state into an active state in which the headrest of the vehicle seat is moved forward. Accordingly, the backward movement of the support member 10 triggers a forward movement of the headrest of the vehicle seat.

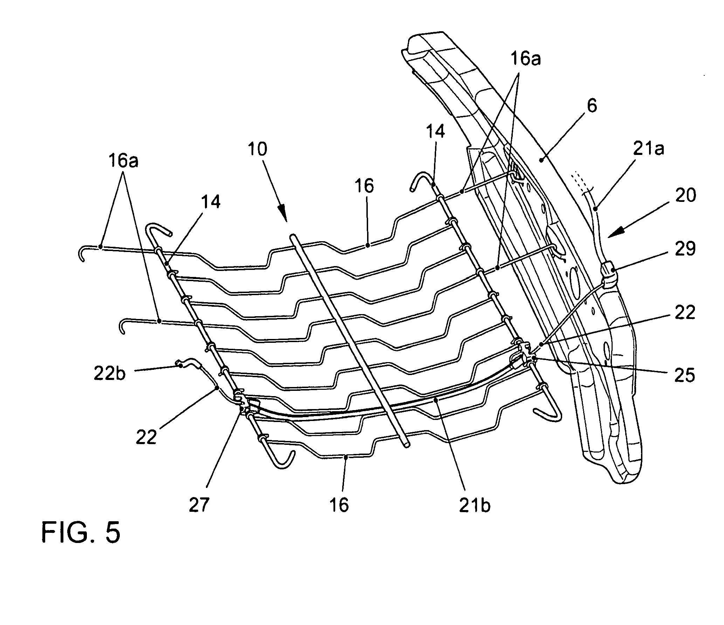

Fig. 5 shows a perspective partial view of an exemplary trigger mechanism operating according to the principles as explained above. In the figure, one side of the seat frame 6, the support member 10 and a part of the Bowden cable arrangement 20 are illustrated. For the sake of clarity, the other side of the seat frame 6, the actuating mechanism 30 and the part of the Bowden cable arrangement 20 connected thereto have been omitted.

As illustrated, the support member 10 comprises a wire framework formed of a pair of side wires 14 and a plurality of transverse wires 16. The transverse wires 16 are coupled to the side wires 14 by being wrapped around them. Some of the transverse wires 16 are provided with hook-shaped extensions 16a extending beyond the side wires 14. The hook-shaped extensions 16a are used to couple the support member 10 to the seat frame 6 so as to achieve a flexible suspension. In the illustrated example, the number of hook-shaped extensions is two on each side of the support member. It is to be understood that the number of hook-shaped extensions and their positions can be varied in depending on the desired suspension characteristics of the support member 10 with respect to the seat frame 6. In particular, the hook-shaped extensions or other flexible couplings may also be provided at a position below the Bowden cable arrangement 20.

In the illustrated example, the hook-shaped extensions 16a couple the support member 10 to the seat frame 6 in an upper region and in a middle region of the support member 10. In the lower region of the support member 10, coupling with respect to the seat frame 6 is accomplished via the Bowden cable arrangement 20. As mentioned above, other flexible couplings with respect to the seat frame may be provided in the lower region as well so as to achieve desired comfortable suspension characteristics.

As further illustrated, the first and second attachment members 25, 27 are formed as plastic clips configured to be clipped to the respective side wire 14 of the support member. The connecting member 29 is a plastic piece attached to the respective side of the seat frame 6. The second end portion 22b of the wire 22 of the Bowden cable arrangement 20 is formed as a Z-nipple so as to be hooked into a corresponding receiving structure of the respective side of the seat frame 6 (not illustrated). In other implementations, a plastic end cap may be used instead of the Z-nipple, thereby reducing generation of noise if there is low or no tension on the Bowden cable arrangement 20.

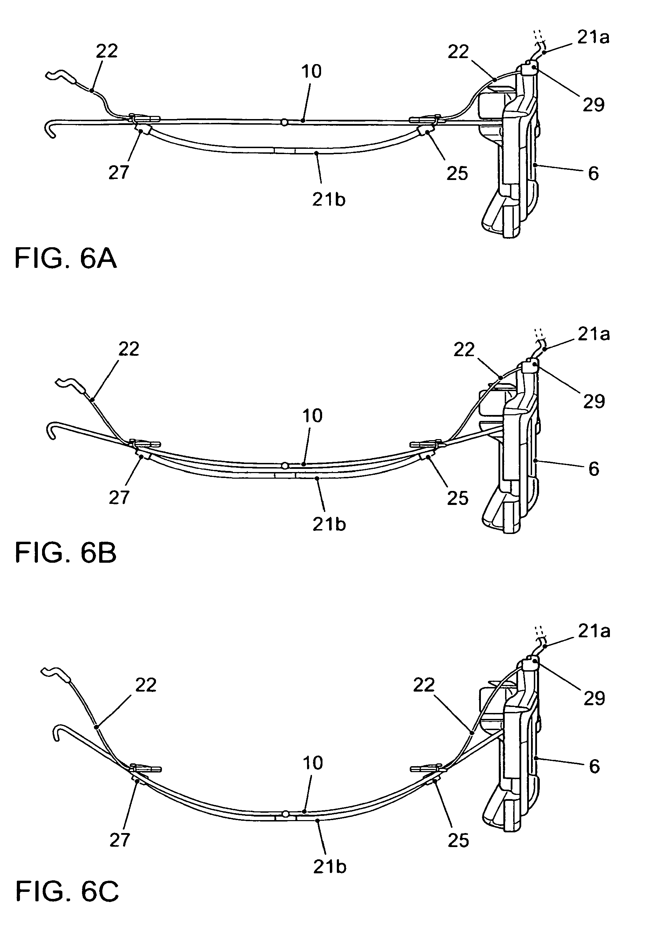

Figs. 6(A), 6(B), and 6(C) show bottom views of the trigger mechanism of Fig. 5 in different states of operation.

In Fig. 6 (A), the support member 10 is unloaded. This state corresponds to a situation in which there is no seat occupant on the vehicle seat. In this state, the wire 22 of the Bowden cable arrangement 20 is not tensioned and there may be loose portions of the wire 22.

In the state of Fig. 6(B), a maximum-comfort deflection of the support member 10 is illustrated. In this state, the support member 10 is arched in the backward direction and is in vicinity of the second portion of the sheath 21b. Further, as compared to the situation of Fig. 6(A), the support member 10 has been displaced in the backward direction and the unsheathed portions of the Bowden cable arrangement 20 are thus tensioned. However, the tension of the Bowden cable arrangement 20 is not sufficient to cause triggering of the active headrest system.

In Fig. 6(C), a state of the trigger mechanism during a rear-end collision is illustrated. In this state, the inertia forces exerted by the seat occupant exceed the threshold value for triggering and have caused the support member 10 to be further pushed into the backward direction and the tension in the Bowden cable arrangement 20 triggers the active headrest system. The length of the unsheathed portions of the Bowden cable arrangement is increased as compared to the situation of Figs. 6(A) and 6(B), thereby pulling the first end portion of the wire 22 into the first portion of the sheath 21 a. The movement of the first end portion of the wire 22 is used to bring the actuating mechanism into its active state in which the headrest is moved forward so as to support the seat occupant's head.

The threshold value for triggering the active headrest system can be set by suitably selecting the suspension characteristics of the support member 10 with respect to the seat frame 6 and the lengths of the components of the Bowden cable arrangement 20, i.e. of the wire 22 and of the second portion of the sheath 21b, and by taking into account or adjusting the mechanical resistance provided by the actuating mechanism. Typically, the threshold value may be set to be above 400 N, thereby avoiding interference with the seat occupant's comfort. Preferably, the threshold value is set to be about 500 N. In some cases, also a punctual load of 200 N may be sufficient to cause triggering of the active headrest system.

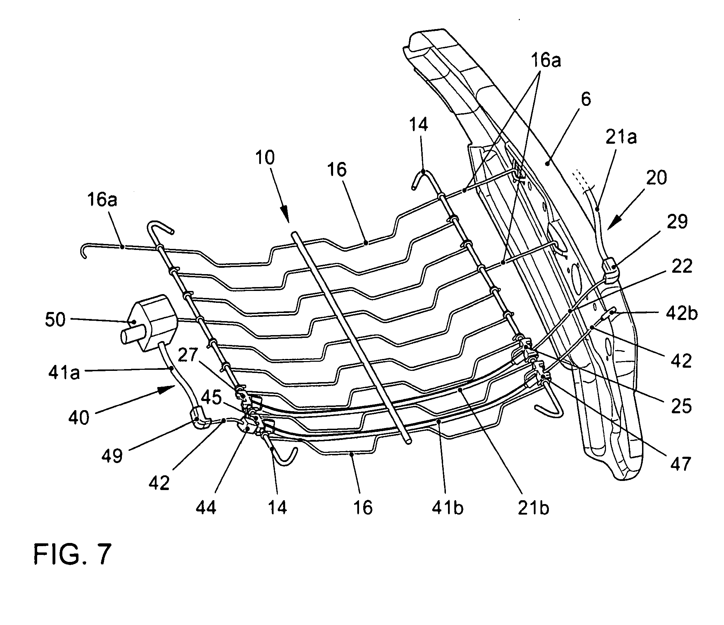

Fig. 7 shows a perspective partial view of a trigger mechanism according to a further implementation. The trigger mechanism of Fig. 7 generally corresponds to that of Fig. 6, and similar components have been designated with the same reference signs. It is refrained from repeatedly describing these components, and in the following only the differences of the trigger mechanism of Fig. 7 as compared to that of Fig. 5 will be explained.

As illustrated in Fig. 7, the trigger mechanism further comprises an adjustment mechanism (which may also be referred to as adjustment means) for adjusting the degree of support in the lumbar region of the backrest. In the illustrated implementation, the adjustment mechanism comprises a further Bowden cable arrangement 40 which couples the support member 10 to the seat frame at opposite sides thereof. The further Bowden cable arrangement 40 comprises a wire 42 guided in a sheath 41 a, 41 b and is adapted to couple the support member 10 to the seat frame 6 in such a way that the position of the support member 10 relative to the seat frame 6 is controlled by tension of the wire 42. For tensioning the wire 42 of the further Bowden cable arrangement 40, a first end portion of the wire 42 is coupled to an actuator 50. The actuator 50 may be a manually driven actuator or an electrically driven actuator.

A second connecting member 49 (which may also be referred to as a second connecting means) is provided for coupling the sheath 41a, 41b of the further Bowden cable arrangement 40 to the seat frame 6. Third and fourth attachment members 45, 47 (which may also be referred to as third and fourth attachment means) are provided for coupling the sheath 41a, 41 b of the further Bowden cable arrangement 40 to the support member 10 at opposite sides thereof. A second end 42b of the wire 42 of the further Bowden cable arrangement 40 is coupled to one side of the seat frame 6, opposite to that side of the seat frame 6 carrying the second connecting member 49. The second end 42b of the wire 42 may be configured as a Z-nipple and be hooked into a corresponding receiving structure of the seat frame 6. Alternatively, a plastic end cap or other suitable connecting structure may be used instead of the Z-nipple. Although in the illustrated example the attachment members 25, 27, 45, 47 are formed as separate components, it is also possible to integrally form those attachment members 25, 27, 45, 47 which are located on the same side of the support member 10, i.e. the first and fourth attachment members 25, 47 and/or the second and third attachment members 27, 45.

The sheath 41 a, 41 b of the further Bowden cable arrangement 40 comprises a first portion 41 a and a second portion 41 b which are separated from each other. The first portion 41 a extends between the actuators 50 and the second connecting member 49. The second portion 41 b extends between the third attachment member 45 and the fourth attachment member 47. The first and second portions are movable with respect to each other along the wire 42, which extends through both portions of the sheath 41 a, 41 b. The third and fourth attachment members 45, 47 are formed as plastic clips configured to be clipped to the side wires 14 of the support member 10. The second connecting member 49 is formed as a plastic piece attached to the corresponding side of the seat frame 6.

The Bowden cable arrangement 20 and the further Bowden cable arrangement 40 are coupled to a support member 10 in the same region of the backrest. As illustrated, the first and second attachment members 25, 27 of the Bowden cable arrangement 20 are arranged closely above the third and fourth attachment members 45, 47 of the further Bowden cable arrangement 40. As mentioned above, it is thus possible that the first Bowden cable arrangement 20 and the second Bowden cable arrangement 40 and the respective attachment structures have common components. For example, the attachment members 25, 27, 45, 47 on the same side of the support member 10 could be integrally formed or the second sheath portions 21 b, 41 b could be implemented as a single sheath guiding both wires 22 and 42.

The third attachment member 45 is located on the second side of the support member 10, and the fourth attachment member 47 is located on the first side of the support member 10. That is to say, the first attachment member and the fourth attachment member are located on the same side of the support member 10, and the second attachment member 27 and the third attachment member 45 are located on the same side of the support member 10. The second connecting member 49 is located on that side of the seat frame 6 which is in vicinity of the second side of the support member 10, i.e. in vicinity of the second and third attachment members 27, 45.

As a further difference as compared to the trigger mechanism of Fig. 5, the second end of the wire 22 of the Bowden cable arrangement 20 is not directly coupled to the seat frame 6 via a Z-nipple or the like, but is coupled to the seat frame 6 via the wire 42 of the further Bowden cable arrangement 40. For this purpose, a coupling piece 44 is provided on the unsheathed portion of the further Bowden cable arrangement 40 which extends between the second connecting member 49 and the third attachment member 45. The second end portion of the wire 22 is coupled to the coupling piece 44, and the coupling piece 44 is coupled to the seat frame 6 via the wire 42 and the second connecting member 49.

The operations for adjusting the degree of lumbar support using the adjustment mechanism of Fig. 7 are the following: In order to increase the degree of lumbar support, the tension in the further Bowden cable arrangement 40 is increased using the actuator 50. This causes the unsheathed portions of the further Bowden cable arrangement 40, which extend between the second connecting member 49 and the third attachment member 45, and between the fourth attachment member 47 and the second end portions 42b of the wire 42, to be shortened, thereby pulling the lumbar portion of the support member 10 forwardly so as to increase the degree of support. The tension in the further Bowden cable arrangement 40 is symmetrically distributed to both sides of the support member 10, thereby providing a symmetric support feeling. In order to decrease the degree of lumbar support, the tension in the further Bowden cable arrangement 40 is decreased, thereby increasing the length of the unsheathed portions of the further Bowden cable arrangement 40. Due to the flexible extension of the support member 10 in the seat frame, the lumbar portion of the support member 10 thus moves in the backward direction, away from the lumbar region of a seat occupant.

When increasing the degree of support, the coupling piece 44 provided on the wire 42 is moved toward the seat frame 6, away from the support member 10, thereby pulling the wire 22 of the Bowden cable arrangement 20. Accordingly, when decreasing the length of the unsheathed portions of the further Bowden cable arrangement 40 using the actuator 50, the length of the unsheathed portions of the Bowden cable arrangement 20 is adjusted in a corresponding manner. In particular, the length of the wire couplings between the attachment member 25 and the connecting member 29 and between the attachment member 27 and the connecting member 49 is decreased by substantially the same amount as the unsheathed portions of the Bowden cable arrangement 40. This allows for maintaining the threshold value for triggering of the active headrest system substantially independent of the adjusted degree of lumbar support.

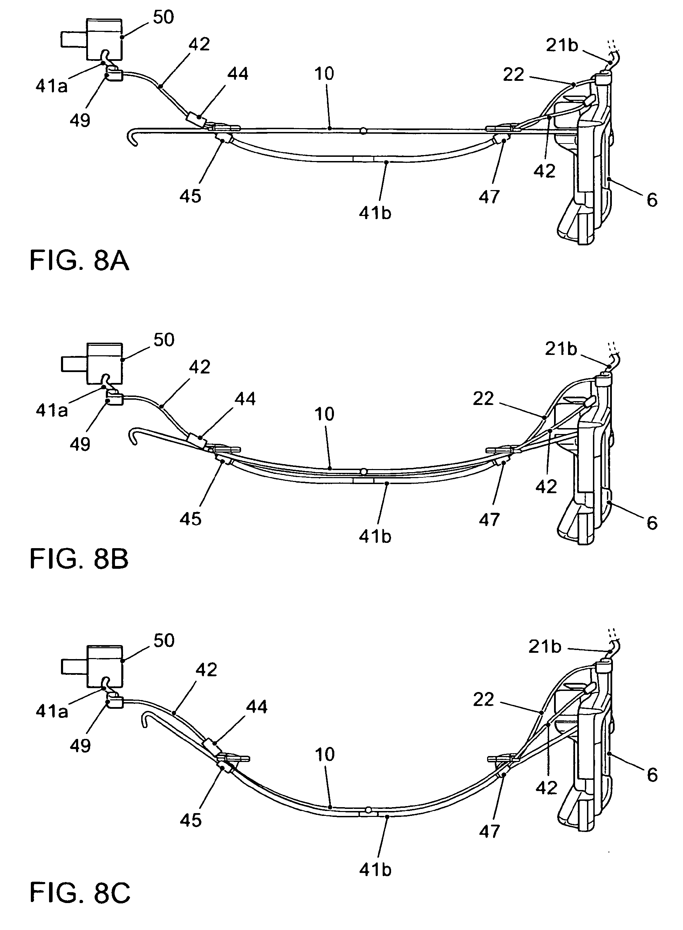

Figs. 8(A), 8(B), and 8(C) show bottom views of the trigger mechanism of Fig. 7 in different states of operation.

In Fig. 8(A), the support member 10 is in an unloaded position. The degree of lumbar support is adjusted to a minimum value. In this state, there is low or no tension on both Bowden cable arrangements 20, 40. Again, there may be loose portions of the wire 22 in the unsheathed portions of the Bowden cable arrangement 20.

In Fig. 8(B), a maximum-comfort deflection of the support member 10 is illustrated. In this state, the support member 10 is arched in the backward direction so as to come into vicinity of the second portions of the sheaths 21 b, 41 b of the Bowden cable arrangements 20, 40. The Bowden cable arrangement 20 is tensioned, but the tension is not sufficient to cause triggering of the active headrest system. That is to say, the force exerted onto the support member 10 is still below the threshold value for triggering the active headrest system.

In Fig. 8(C), the load onto the support member 10 is further increased due to a rear-end collision of the vehicle. In this state, the tension in the Bowden cable arrangement 20 is sufficient to trigger the active headrest system, and the length of the unsheathed portions of the Bowden cable arrangement 20 is increased, thereby pulling the first end of the wire 22 into the first portion of the sheath 21 a, which causes the actuating mechanism to be activated. The threshold value of the force exerted onto the support member to cause triggering may be the same as in the trigger mechanism of Figs. 5 and 6.

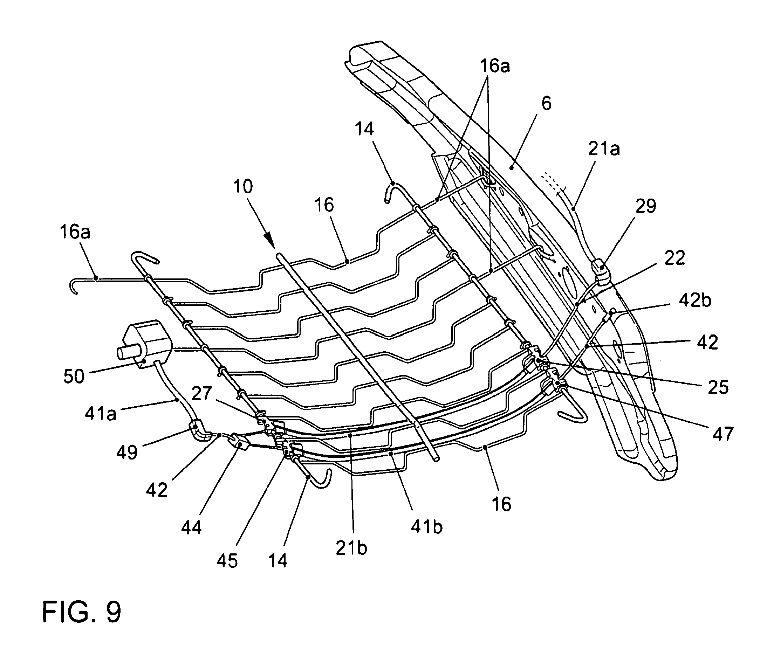

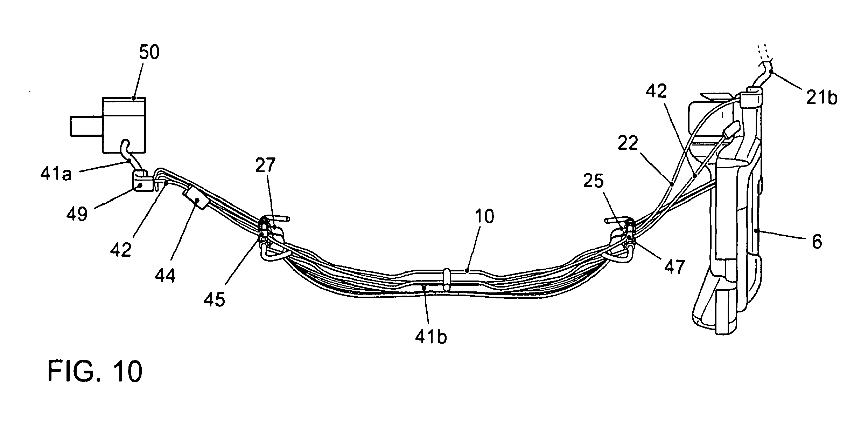

Fig. 9 shows a perspective view of the trigger mechanism of Figs. 7 and 8 in a further state of operation and Fig. 10 shows a corresponding bottom view. As can be seen, the degree of lumbar support has been increased by increasing the tension in the further Bowden cable arrangement 40. That is to say, the unsheathed portions of the Bowden cable arrangement 40 have been shortened, thereby pulling the lumbar region of the support member 10 in the forward direction. This causes the coupling piece 44 between the wires 22 and 42 to be pulled away from the support member 10 toward the second connecting member 49. In this way, it is avoided that the tension in the Bowden cable arrangement 20 is excessively decreased or excessive loose portions of the wire 22 are created in the unsheathed portions of the Bowden cable arrangement 20. The threshold for triggering the active headrest system is kept substantially at the same value, irrespective of the adjusted degree of lumbar support.

It is to be understood that various modifications are possible within the above-described trigger mechanisms for an active headrest system. For example, different types of support members could be used. Also the attachment of the Bowden cable arrangements with respect to the seat frame and the support member could be modified. The position of the Bowden cable arrangement for triggering the active headrest system can be selected as appropriate and can be placed at any suitable position of the support member. Different types of adjustment mechanisms can be used for adjusting the degree of lumbar support.

## Claims

1. A trigger mechanism for an active headrest system, comprising:
a support member (10) for providing support of upholstery in the backrest (2) of a vehicle seat (1; 1') and adapted to be flexibly suspended in a seat frame (6),
a Bowden cable arrangement (20) comprising a wire (22) guided in a sheath (21a, 21b) and adapted to couple the support member (10) to the seat frame (6) in such a way that the tension of the wire (22) is controlled by movement of the support member (10) relative to the seat frame (6), the wire (22) of the Bowden cable arrangement (20) being adapted to be coupled to an actuating mechanism (30; 30') for movement of a headrest (3; 3') of the vehicle seat (1; 1'),
first attachment means (25) for coupling the sheath (21 a) of the Bowden cable arrangement (20) to a first side of the support member (10),
second attachment means (27) for coupling the sheath (21a) of the Bowden cable arrangement (20) to a second side of the support member (10) opposite to the first side, and
connecting means (29) for coupling the sheath (21 b) of the Bowden cable arrangement (20) to the seat frame (6).

2. The trigger mechanism according to claim 1,
wherein the sheath (21a, 21b) of the Bowden cable arrangement (20) comprises a first portion (21 a) and a second portion (21 b) which are separated from each other, wherein the wire (22) of the Bowden cable arrangement extends from a first end portion (22a) adapted to be coupled to the actuating mechanism (30, 30'), through the first and second portions of the sheath (21a, 21b), to a second end portion (22b) adapted to be coupled to the seat frame (6), and
wherein the first portion of the sheath (21a) extends between the actuating mechanism (30; 30') and the connecting means (29) and the second portion of the sheath (21 b) extends between the first attachment means (25) and the second attachment means (27).

3. The trigger mechanism according to claim 2,
wherein the support member (10) comprises a pair of side wires (14) and a plurality of transverse members (16) extending between the side wires (14), and
wherein the first and second attachment means (25, 27) are plate clips adapted to be clipped to the side wires (14).

4. The trigger mechanism according to any one of the preceding claims,
wherein the first and second attachment means (25; 27) are arranged in the lumbar region of the backrest (2).

5. The trigger mechanism according to any of the preceding claims, comprising:
adjustment means (40, 50) for adjusting the degree of support in the lumbar region of the backrest (2).

6. The trigger mechanism according to claim 5,
wherein the adjustment means comprise a further Bowden cable arrangement (40) comprising a wire (42) guided in a sheath (41a, 41b) and adapted to couple the support member (10) to the seat frame (6) in such a way that the position of the support member (10) relative to the seat frame (6) is controlled by tension of the wire (42).

7. The trigger mechanism according to claim 6,
wherein a coupling piece (44) is provided between the wire (22) of the Bowden cable arrangement (20) and the wire (42) of the further Bowden cable arrangement (40).

8. The trigger mechanism according to claim 6 or 7, comprising:
first attachment means (25) for coupling the sheath (21b) of the Bowden cable arrangement (20) to a first side of the support member (10),
second attachment means (27) for coupling the sheath (21 b) of the Bowden cable arrangement (20) to a second side of the support member (10),
third attachment means (45) for coupling the sheath (41 b) of the further Bowden cable arrangement (40) to the second side of the support member (10),
fourth attachment means (47) for coupling the sheath (41b) of the further Bowden cable arrangement (40) to the first side of the support member (10),
first connecting means (29) for coupling the sheath (21a) of the Bowden cable arrangement to the seat frame (6), and
second connecting means (49) for coupling the sheath (41 a) of the further Bowden cable arrangement to the seat frame (6).

9. The trigger mechanism according to claim 8,
wherein the sheath (21 a, 21 b) of the Bowden cable arrangement (20) comprises a first portion (21 a) and a second portion (21 b) which are separated from each other, wherein the wire (22) of the Bowden cable arrangement (20) extends from a first end portion (22a) adapted to be coupled to the actuating mechanism (30; 30'), through the first and second portions of the sheath (21 a, 21 b), to a second end portion adapted to be coupled to the seat frame (6),
wherein the first portion of the sheath (21 a) extends between the actuating mechanism (30; 30') and the connecting means (29), and the second portion of the sheath (21 b) extends between the first attachment means (25) and the second attachment means (27),
wherein the sheath (41 a, 41 b) of the further Bowden cable arrangement (40) comprises a first portion (41 a) and a second portion (41 b) which are separated from each other, wherein the wire (42) of the further Bowden cable arrangement (40) extends from a first end portion adapted to be coupled to an actuator (50), through the first and second portions of the sheath (41 a, 41 b), to a second end portion (42b) adapted to be coupled to the seat frame (6), and
wherein the first portion of the sheath (41a) extends between the actuator (50) and the second connecting means (49), and the second portion of the sheath (41b) extends between the third attachment means (45) and the fourth attachment means (47).

10. The trigger mechanism according to claim 9,
wherein the second end portion of the wire (22) of the Bowden cable arrangement (20) is coupled to the wire (42) of the further Bowden cable arrangement (40) in an unsheathed portion of the further Bowden cable arrangement (40), the unsheathed portion extending between the second connecting means (49) and the third attachment means (45).

11. The trigger mechanism according to any one of the preceding claims, comprising:
an actuating mechanism (30) configured to pivot the headrest in a forward direction.

12. The trigger mechanism according to any one of the preceding claims, comprising:
an actuating mechanism (30') configured to displace a front portion (3A) of the headrest (30) in a forward direction.

13. The trigger mechanism according to any one of the preceding claims,
wherein the trigger mechanism is configured in such a way that the movement of the headrest (3; 3') is triggered when the load applied to the support member (10) exceeds a threshold value, and
wherein the threshold value is selected to be above 400 N, preferably above 500 N.

14. The trigger mechanism according to any one of the preceding claims,
wherein the actuating mechanism (30; 30') comprises a lever assembly for converting movement of the wire (22) of the Bowden cable arrangement (20) into movement of the headrest (3; 3').

15. A vehicle seat (1) with an active headrest system, comprising:
a headrest (3; 3') which is movable in a forward direction by means of an actuating mechanism (30; 30'),
a backrest (2) having a seat frame (6), and
a trigger mechanism according to any one of the preceding claims.

## Patentansprüche

1. Auslösermechanismus für ein aktives Kopfstützensystem, umfassend:
ein Unterstützungselement (10) zur Bereitstellung von Unterstützung für Polsterung in der Rückenstütze eines Fahrzeugsitzes (1; 1') und angepasst, um in einem Sitzrahmen (6) zu flexibel aufgehängt zu werden,
eine Bowdenzugvorrichtung (20), welche einen in einer Ummantelung (21 a, 21 b) geführten Draht (22) umfasst und angepasst ist, um das Unterstützungselement (10) mit dem Sitzrahmen so zu koppeln, dass die Spannung des Drahtes (22) durch Bewegung des Unterstützungselements (10) bezüglich des Sitzrahmens (6) kontrolliert wird, wobei der Draht (22) der Bowdenzugvorrichtung (20) angepasst ist, um mit einem Betätigungsmechanismus (30; 30') zur Bewegung einer Kopfstütze (3; 3') des Fahrzeugsitzes (1; 1') gekoppelt zu werden;
erste Anbringungsmittel (25) zum Koppeln der Ummantelung (21a) der Bowdenzugvorrichtung (20) mit einer ersten Seite des Unterstützungselements (10),
zweite Anbringungsmittel (27) zur Kopplung der Ummantelung (21a) der Bowdenzugvorrichtung (20) mit einer der ersten Seite gegenüberliegenden zweiten Seite des Unterstützungselements (10), und
Verbindungsmittel (29) zur Kopplung der Ummantelung (21b) der Bowdenzugvorrichtung (20) mit dem Sitzrahmen (6).

2. Auslösermechanismus nach Anspruch 1,
wobei die Ummantelung (21 a, 21 b) der Bowdenzugvorrichtung (20) einen ersten Abschnitt (21 a) und einen zweiten Abschnitt (21 b), welche voneinander getrennt sind, umfasst,
wobei der Draht (22) der Bowdenzugvorrichtung (20) sich von einem ersten Endabschnitt (22a), welcher angepasst ist, um mit dem Betätigungsmechanismus (30; 30') gekoppelt zu werden, durch den ersten und den zweiten Abschnitt der Ummantelung (21a, 21b) zu einem zweiten Endabschnitt (22b), welcher angepasst ist, um mit dem Sitzrahmen (6) gekoppelt zu werden, erstreckt, und
wobei sich der erste Abschnitt der Ummantelung (21a) zwischen dem Betätigungsmechanismus (30; 30') und den Verbindungsmitteln (29) erstreckt und wobei sich der zweite Abschnitt der Ummantelung (21 b) zwischen den ersten Anbringungsmitteln (25) und den zweiten Anbringungsmitteln (27) erstreckt.

3. Auslösermechanismus nach Anspruch 2,
wobei das Unterstützungselement (10) ein Paar von Seitendrähten (14) und eine Vielzahl von Querelementen (16), welche sich zwischen den Seitendrähten (14) erstrecken, aufweist, und wobei die ersten und die zweiten Anbringungsmittel (25, 27) Plattenklemmen sind, welche angepasst sind, um an die Seitendrähte (14) geklemmt zu werden.

4. Auslösermechanismus nach einem der vorhergehenden Ansprüche,
wobei die ersten und zweiten Annbringungsmittel (25; 27) im Lendenbereich der Rückenstütze (2) angeordnet sind.

5. Auslösermechanismus nach einem der vorhergehenden Ansprüche, umfassend:
Einstellungsmittel (40, 50) zum Einstellen des Grads der Unterstützung in dem Lendenbereich der Rückenstütze (2).

6. Auslösermechanismus nach Anspruch 5,
wobei die Einstellungsmittel eine weitere Bowdenzugvorrichtung (40), welche einen in einer Ummantelung (41 a, 41b) geführten Draht (42) umfasst und angepasst ist, um das Unterstützungselement (10) mit dem Sitzrahmen so zu koppeln, dass die Position des Unterstützungselements (10) bezüglich des Sitzrahmens (6) durch die Spannung des Drahts (42) kontrolliert wird.

7. Auslösermechanismus nach Anspruch 6,
wobei ein Kopplungsstück zwischen dem Draht (22) der Bowdenzugvorrichtung (20) und dem Draht (42) der weiteren Bowdenzugvorrichtung (40) vorgesehen ist.

8. Auslösermechanismus nach Anspruch 6 oder 7, umfassend:
erste Anbringungsmittel (25) zur Kopplung der Ummantelung (21b) der Bowdenzugvorrichtung (20) mit einer ersten Seite des Unterstützungselements (10),
zweite Anbringungsmittel (27) zur Kopplung der Ummantelung (21b) der Bowdenzugvorrichtung (20) mit einer zweiten Seite des Unterstützungselements (10),
dritte Anbringungsmittel (45) zur Kopplung der Ummantelung (41b) der weiteren Bowdenzugvorrichtung (40) mit der zweiten Seite des Unterstützungselements (10),
vierte Anbringungsmittel (47) zur Kopplung der Ummantelung (41b) der weiteren Bowdenzugvorrichtung (40) mit der ersten Seite des Unterstützungselements (10),
erste Verbindungsmittel (29) zur Kopplung der Ummantelung (21b) der Bowdenzugvorrichtung mit dem Sitzrahmen (6), und
zweite Verbindungsmittel (49) zur Kopplung der Ummantelung (41a) der weiteren Bowdenzugvorrichtung (40) mit dem Sitzrahmen (6).

9. Auslösermechanismus nach Anspruch 8,
wobei die Ummantelung (21a, 21b) der Bowdenzugvorrichtung (20) einen ersten Abschnitt (21 a) und einen zweiten Abschnitt (21 b), welche voneinander getrennt sind, umfasst,
wobei der Draht (22) der Bowdenzugvorrichtung (20) sich von einem ersten Endabschnitt, welcher angepasst ist, um mit dem Betätigungsmechanismus (30, 30') gekoppelt zu werden, durch den ersten und den zweiten Abschnitt der Ummantelung (21 a, 21b) zu einem zweiten Endabschnitt, welcher angepasst ist, um mit dem Sitzrahmen (6) gekoppelt zu werden, erstreckt,
wobei der erste Abschnitt der Ummantelung (21a) sich zwischen dem Betätigungsmechanismus (30; 30') und den Verbindungsmitteln (29) erstreckt, und der zweite Abschnitt der Ummantelung (21b) sich zwischen den ersten Anbringungsmitteln (25) und den zweiten Anbringungsmitteln (27) erstreckt,
wobei die Ummantelung (41 a, 41b) der weiteren Bowdenzugvorrichtung (40) einen ersten Abschnitt (41a) und einen zweiten Abschnitt (41b), welche voneinander getrennt sind, umfasst,
wobei der Draht (42) der weiteren Bowdenzugvorrichtung (40) sich von einem ersten Abschnitt, welcher angepasst ist, um mit einen Aktuator (50) gekoppelt zu werden, durch den ersten und den zweiten Abschnitt der Ummantelung (41a, 41b) zu einem zweiten Endabschnitt (42b), welcher angepasst ist, um mit dem Sitzrahmen (6) gekoppelt zu werden, erstreckt, und
wobei der erste Abschnitt der Ummantelung (41 a) sich zwischen dem Aktuator (50) und den zweiten Verbindungsmitteln (49) erstreckt, und der zweite Abschnitt der Ummantelung (41b) sich zwischen den dritten Anbringungsmitteln (45) und den vierten Anbringungsmitteln (47) erstreckt.

10. Auslösermechanismus nach Anspruch 9,
wobei der zweite Endabschnitt des Drahts (22) der Bowdenzugvorrichtung (20) mit dem Draht (42) der weiteren Bowdenzugvorrichtung (40) an einem nicht ummantelten Abschnitt der weiteren Bowdenzugvorrichtung (40) gekoppelt ist, wobei sich der nicht ummantelte Abschnitt zwischen den zweiten Verbindungsmitteln (49) und den dritten Anbringungsmitteln (45) erstreckt.

11. Auslösermechanismus nach einem der vorhergehenden Ansprüche, umfassend:
einen Betätigungsmechanismus (30), welcher konfiguriert ist, um die Kopflehne in eine Richtung nach vorne zu schwenken.

12. Auslösermechanismus nach einem der vorhergehenden Ansprüche, umfassend:
einen Betätigungsmechanismus (30'), welcher konfiguriert ist, um einen Vorderabschnitt (3A) der Kopfstütze (30) in eine Richtung nach vorne zu verschieben.

13. Auslösermechanismus nach einem der vorhergehenden Ansprüche,
wobei der Auslösemechanismus so konfiguriert ist, dass die Bewegung der Kopfstütze (3; 3') ausgelöst wird, wenn die auf das Unterstützungselement (10) wirkende Last einen Grenzwert überschreitet, und
wobei der Grenzwert größer als 400 N, bevorzugterweise größer als 500 N, gewählt ist.

14. Auslösermechanismus nach einem der vorhergehenden Ansprüche,
wobei der Betätigungsmechanismus (30; 30') eine Hebelanordnung zur Umsetzung einer Bewegung des Drahts (22) der Bowdenzugvorrichtung (20) in eine Bewegung der Kopfstütze (3; 3') umfasst.

15. Fahrzeugsitz (1) mit einem aktiven Kopfstützensystem, umfassend:
eine mit Hilfe einer Betätigungsvorrichtung (30; 30') in eine Richtung nach vorne bewegliche Kopfstütze (3, 3'),
eine einen Sitzrahmen (6) aufweisende Rückenstütze (2), und
einen Auslösermechanismus nach einem der vorhergehenden Ansprüche.

## Revendications

1. Mécanisme de déclenchement pour système d'appui-tête actif, comprenant :
un organe de support (10) permettant d'assurer le soutien du garnissage du dossier (2) d'un siège de véhicule (1 ; 1') et adapté pour être suspendu de façon flexible dans une armature de siège (6),
un agencement de câble Bowden (20) comprenant un fil (22) guidé dans une gaine (21a, 21b) et adapté pour coupler l'organe de support (10) à l'armature de siège (6) de telle sorte que la tension du fil (22) est commandée par le mouvement de l'organe de support (10) relatif à l'armature de siège (6), le fil (22) de l'agencement de câble Bowden (20) étant adapté pour être couplé à un mécanisme d'activation (30 ; 30') pour le mouvement d'un appui-tête (3 ; 3') du siège de véhicule (1 ; 1'),
un premier moyen de fixation (25) permettant de coupler la gaine (21a) de l'agencement de câble Bowden (20) à un premier côté de l'organe de support (10),
un deuxième moyen de fixation (27) permettant de coupler la gaine (21a) de l'agencement de câble Bowden (20) à un second côté de l'organe de support (10) opposé au premier côté, et
un moyen de raccordement (29) permettant de coupler la gaine (21b) de l'agencement de câble Bowden (20) à l'armature de siège (6).

2. Mécanisme de déclenchement selon la revendication 1,
dans lequel la gaine (21a, 21b) de l'agencement de câble Bowden (20) comprend une première portion (21a) et une seconde portion (21b) qui sont séparées l'une de l'autre,
dans lequel le fil (22) de l'agencement de câble Bowden s'étend depuis une première portion d'extrémité (22a) adaptée pour être couplée au mécanisme d'activation (30, 30'), par les première et seconde portions de la gaine (21a, 21b), jusqu'à une seconde portion d'extrémité (22b) adaptée pour être couplée à l'armature de siège (6), et
dans lequel la première portion de la gaine (21a) s'étend entre le mécanisme d'activation (30 ; 30') et le moyen de raccordement (29) et la seconde portion de la gaine (21b) s'étend entre le premier moyen de fixation (25) et le deuxième moyen de fixation (27).

3. Mécanisme de déclenchement selon la revendication 2,
dans lequel l'organe de support (10) comprend une paire de fils latéraux (14) et une pluralité d'organes transversaux (16) s'étendant entre les fils latéraux (14), et
dans lequel les premier et deuxième moyens de fixation (25, 27) sont des attaches à plaque adaptées pour être attachées sur les fils latéraux (14).

4. Mécanisme de déclenchement selon l'une quelconque des revendications précédentes,
dans lequel les premier et deuxième moyens de fixation (25, 27) sont disposés dans la région lombaire du dossier (2).

5. Mécanisme de déclenchement selon l'une quelconque des revendications précédentes, comprenant :
des moyens d'ajustement (40, 50) permettant d'ajuster le degré de soutien de la région lombaire du dossier (2).

6. Mécanisme de déclenchement selon la revendication 5,
dans lequel les moyens d'ajustement comprennent un agencement de câble Bowden supplémentaire (40) comprenant un fil (42) guidé dans une gaine (41a, 41b) et adapté pour coupler l'organe de support (10) à l'armature de siège (6) de telle sorte que la position de l'organe de support (10) par rapport à l'armature de siège (6) soit commandée par la tension du fil (42).

7. Mécanisme de déclenchement selon la revendication 6,
dans lequel une pièce de couplage (44) est disposée entre le fil (22) de l'agencement de câble Bowden (20) et le fil (42) de l'agencement de câble Bowden supplémentaire (40).

8. Mécanisme de déclenchement selon la revendication 6 ou 7, comprenant :
un premier moyen de fixation (25) permettant de coupler la gaine (21b) de l'agencement de câble Bowden (20) à un premier côté de l'organe de support (10),
un deuxième moyen de fixation (27) permettant de coupler la gaine (21b) de l'agencement de câble Bowden (20) à un deuxième côté de l'organe de support (10),
un troisième moyen de fixation (45) permettant de coupler la gaine (41b) de l'agencement de câble Bowden supplémentaire (40) au deuxième côté de l'organe de support (10),
un quatrième moyen de fixation (47) permettant de coupler la gaine (41b) de l'agencement de câble Bowden supplémentaire (40) au premier côté de l'organe de support (10),
un premier moyen de raccordement (29) permettant de coupler la gaine (21a) de l'agencement de câble Bowden à l'armature de siège (6), et
un second moyen de raccordement (49) permettant de coupler la gaine (41a) de l'agencement de câble Bowden supplémentaire à l'armature de siège (6).

9. Mécanisme de déclenchement selon la revendication 8,
dans lequel la gaine (21a, 21b) de l'agencement de câble Bowden (20) comprend une première portion (21a) et une seconde portion (21b) qui sont séparées l'une de l'autre,
dans lequel le fil (22) de l'agencement de câble Bowden (20) s'étend d'une première portion d'extrémité (22a) adaptée pour être couplée au mécanisme d'activation (30 ; 30'), par les première et seconde portions de la gaine (21a, 21b) vers une seconde
portion d'extrémité adaptée pour être couplée à l'armature de siège (6),
dans lequel la première portion de la gaine (21a) s'étend entre le mécanisme d'activation (30 ; 30') et le moyen de raccordement (29), et la seconde portion de la gaine (21b) s'étend entre le premier moyen de fixation (25) et le deuxième moyen de fixation (27),
dans lequel la gaine (41a, 41b) de l'agencement de câble Bowden supplémentaire (40) comprend une première portion (41a) et une seconde portion (41b) qui sont séparées l'une de l'autre,
dans lequel le fil (42) de l'agencement de câble Bowden supplémentaire (40) s'étend depuis une première portion d'extrémité adaptée pour être couplée à un actionneur (50), par les première et seconde portions de la gaine (41a, 41b), vers une seconde portion d'extrémité (42b) adaptée pour être couplée à l'armature de siège (6), et
dans lequel la première portion de la gaine (41a) s'étend entre l'actionneur (50) et le second moyen de raccordement (49), et la seconde portion de la gaine (41b) s'étend entre le troisième moyen de fixation (45) et le quatrième moyen de fixation (47).

10. Mécanisme de déclenchement selon la revendication 9,
dans lequel la seconde portion d'extrémité du fil (22) de l'agencement de câble Bowden (20) est couplée au fil (42) de l'agencement de câble Bowden supplémentaire (40) dans une portion non gainée de l'agencement de câble Bowden supplémentaire (40), la portion non gainée s'étendant entre le second moyen de
raccordement (49) et le troisième moyen de fixation (45).

11. Mécanisme de déclenchement selon l'une quelconque des revendications précédentes, comprenant :
un mécanisme d'activation (30) configuré pour faire pivoter l'appui-tête vers l'avant.

12. Mécanisme de déclenchement selon l'une quelconque des revendications précédentes, comprenant :
un mécanisme d'activation (30') configuré pour déplacer une portion avant (3A) de l'appui-tête (30) vers l'avant.

13. Mécanisme de déclenchement selon l'une quelconque des revendications précédentes,
dans lequel le mécanisme de déclenchement est configuré de telle sorte que le mouvement de l'appui-tête (3 ; 3') est déclenché lorsque la charge appliquée à l'organe de support (10) dépasse une valeur seuil, et
dans lequel la valeur seuil est choisie pour être supérieure à 400 N, de préférence supérieure à 500 N.

14. Mécanisme de déclenchement selon l'une quelconque des revendications précédentes,
dans lequel le mécanisme d'activation (30 ; 30') comprend un ensemble de levier permettant de convertir le mouvement du fil (22) de l'agencement de câble Bowden (20) en un mouvement de l'appui-tête (3 ; 3').

15. Siège de véhicule (1) avec un système d'appui-tête actif, comprenant:
un appui-tête (3 ; 3') qui est mobile vers l'avant au moyen d'un mécanisme d'activation (30 ; 30'),
un dossier (2) comportant une armature de siège (6) ; et
un mécanisme de déclenchement selon l'une quelconque des revendications précédentes.
